# DEMANDE DE BREVET EUROPEEN

(11) **EP 3 770 924 A1**
(43) Date de publication de la demande: **27.01.2021**
(21) Numéro de dépôt: 20187527.5
(22) Date de dépôt: 23.07.2020
(51) Int. Cl.: H01B 3/22

(54) **CÂBLE ÉLECTRIQUE COMPRENANT UN COMPOSÉ DE REMPLISSAGE**

(30) Priorité: 26.07.2019 FR 1908570
(71) Demandeur: Nexans, 92400 Courbevoie (FR)
(72) Inventeur: GUFFOND, Raphaël, 69007 LYON (FR); PEREGO, Gabriele, 20144 Milan (IT); GABRIELSEN, Andreas, 1482 NITTEDAL (NO); ANNOOT, Romain, 27410 MESNIL EN OUCHE (FR)
(74) Mandataire: Ipsilon

(57) **Abrégé**

La présente invention se rapporte à un câble électrique (100, 101) comprenant au moins un conducteur électrique allongé (1), au moins un élément de protection (4, 41, 42) entourant ledit conducteur électrique allongé (1), et au moins un composé de remplissage (5) entouré par ledit élément de protection (4, 41, 42), caractérisé en ce que le composé de remplissage (5) comprend :
- plus de 20,0 % en poids d'une huile minérale, par rapport au poids total du composé de remplissage, et
- au moins une nano-charge.

## Description

La présente invention se rapporte à câble électrique comprenant au moins un conducteur électrique allongé, au moins un élément de protection entourant ledit conducteur électrique allongé, et au moins un composé de remplissage, ainsi qu'à un procédé de fabrication dudit câble électrique.

L'invention s'applique typiquement mais non exclusivement aux câbles électriques destinés au transport d'énergie, notamment sous une tension de 1 kV à 40 kV, et de préférence d'environ 3 kV en courant alternatif, et/ou aux câbles de télécommunication.

Le domaine d'application préféré de l'invention concerne les câbles électriques sous-marins du type ombilical, tels que par exemples les câbles de véhicules submersibles télécommandés, bien connus sous l'anglicisme « remotely operated vehicles » (ROV).

Dans les câbles électriques pour véhicules submersibles télécommandés, les interstices ou vides formés entre les conducteurs électriques isolés sont remplis classiquement avec un adhésif thermofusible, destiné à former une barrière à l'eau.

Toutefois, cet adhésif thermofusible induit un vieillissement, notamment sous contrainte thermique, de l'isolant des conducteurs électriques avec lequel il est en contact, et de ce fait le câble électrique ne présente pas des propriétés optimales de résistance au claquage électrique.

Le but de la présente invention est de pallier les inconvénients des techniques de l'art antérieur en proposant notamment un câble électrique comprenant un nouveau composé de remplissage permettant d'améliorer la résistance au claquage du câble électrique, et ayant une viscosité stable quelle que soit la température du câble électrique en configuration opérationnelle.

La présente invention a pour objet un câble électrique comprenant au moins un conducteur électrique allongé, au moins un élément de protection entourant ledit conducteur électrique allongé, et au moins un composé de remplissage entouré par ledit élément de protection, caractérisé en ce que le composé de remplissage comprend :
- plus de 20,0 % en poids d'une huile minérale, par rapport au poids total du composé de remplissage, et
- au moins une nano-charge.

Grâce à l'invention, le câble électrique présente une résistance au claquage (i.e. rigidité diélectrique) améliorée de façon significative.

En outre, la viscosité du composé de remplissage est stable quelle que soit la température du câble électrique en configuration opérationnelle. La viscosité est notamment élevée et ce, quelle que soit la température du câble électrique. Plus particulièrement, le composé de remplissage placé à l'intérieur du câble électrique selon l'invention présente une viscosité sensiblement constante quelles que soient les variations de température du câble durant son fonctionnement. Ainsi, l'écoulement dans le câble du composé de remplissage est limité de façon significative, voire évité, garantissant une homogénéité du composé de remplissage dans toute la longueur du câble. Enfin, le câble électrique présente de bonnes propriétés de barrière à l'humidité et/ou à l'eau, notamment grâce au caractère hydrophobe du composé de remplissage.

### Le composé de remplissage

Dans l'invention, le composé de remplissage peut comprendre au moins 30,0 % en poids d'huile minérale, de préférence plus de 50,0 % en poids d'huile minérale, et de façon particulièrement préférée au moins 60,0 % en poids d'huile minérale, par rapport au poids total du composé de remplissage.

Il peut en outre comprendre au plus 95,0 % en poids d'huile minérale, et de préférence au plus 90 % en poids d'huile minérale, par rapport au poids total du composé de remplissage.

Le composé de remplissage peut comprendre une quantité de nano-charge nécessaire et suffisante pour obtenir un composé de remplissage avec la viscosité souhaitée, et notamment obtenir un composé de remplissage avec une viscosité d'au moins 100 pascal seconde (Pa.s), de préférence d'au moins 200 Pa.s, et de façon particulièrement préférée d'au moins 300 Pa.s, déterminée à 100°C selon la norme ASTM D 4440.

La viscosité du composé de remplissage peut être d'au plus 1400 Pa.s, de préférence d'au plus 1000 Pa.s, de préférence d'au plus 700 Pa.s, et de façon particulièrement préférée d'au plus 500 Pa.s, déterminée à 40°C selon la norme ASTM D 4440.

A titre d'exemple, le composé de remplissage peut comprendre au moins 0,2 % en poids de nano-charge, de préférence au moins 1,0 % en poids de nano-charge, de préférence au moins 5,0 % en poids de nano-charge, de préférence au moins 10 % en poids de nano-charge, de préférence au moins 15 % en poids de nano-charge, et de façon particulièrement préférée au moins 20 % en poids de nano-charge, par rapport au poids total du composé de remplissage.

Il peut en outre comprendre moins de 80,0 % en poids de nano-charge, de préférence au plus 60,0 % en poids de nano-charge, de préférence moins de 50,0 % en poids de nano-charge, et de façon particulièrement préférée au plus 40,0% en poids de nano-charge, par rapport au poids total du composé de remplissage.

De préférence, le composé de remplissage peut comprendre de 60,0 à 90,0 % en poids d'huile minérale et de 10,0 à 40,0 % en poids de nano-charge, par rapport au poids total du composé de remplissage.

Le composé de remplissage peut en outre comprendre un ou plusieurs additifs. Les additifs sont bien connus de l'homme du métier et peuvent être choisis parmi des antioxydants. Le composé de remplissage peut typiquement comprendre de 0,01 à 5 % en poids, et de préférence de 0,1 à 2 % en poids d'additifs, par rapport au poids total du composé de remplissage.

Dans un mode de réalisation particulièrement préféré, le composé de remplissage peut uniquement comprendre une ou plusieurs huile(s) minérale(s) et une ou plusieurs nano-charge(s).

### L'huile minérale

La composition chimique d'une huile minérale est classiquement définie par sa teneur en carbone paraffinique (Cp), sa teneur en carbone naphténique (Cn) et sa teneur en carbone aromatique (Ca). Les huiles minérales peuvent également contenir un faible pourcentage de molécules d'hydrocarbures qui comprennent dans leur structure des hétéroatomes comme l'azote, le soufre ou l'oxygène (e.g. composés polaires).

Les teneurs Cp, Cn et Ca peuvent être facilement déterminées selon la norme ASTM D 2140.

Selon une forme de réalisation particulièrement préférée de l'invention, l'huile minérale peut comprendre une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

L'huile minérale peut être liquide à 20-25°C environ, et peut notamment être obtenue à partir du raffinage d'un brut pétrolier.

L'huile minérale de l'invention peut être choisie parmi les huiles naphténiques, les huiles paraffiniques, et un de leurs mélanges. De préférence, l'huile minérale est une huile naphténique.

### La nano-charge

La nano-charge de l'invention est plus particulièrement une charge de dimension nanométrique.

La ou les nano-charge(s) de l'invention ont typiquement au moins une de leurs dimensions de taille nanométrique (10⁻⁹ mètre).

Dans la présente invention, on entend par « nano-charge », une particule élémentaire. Un ensemble de particules élémentaires peut être un agglomérat ou agrégat de particules élémentaires, selon les dimensions.

Plus particulièrement, la ou les nano-charge(s) de l'invention (i.e. une ou des particules élémentaires) peu(ven)t avoir au moins une de leurs dimensions d'au plus 2000 nm (nanomètres), de préférence d'au plus 1000 nm, de préférence d'au plus 800 nm, de préférence d'au plus 600 nm, de préférence d'au plus 400nm, et plus préférentiellement d'au plus 100 nm.

En outre, la ou les nano-charge(s) de l'invention peu(ven)t avoir au moins une de leurs dimensions d'au moins 1 nm, et de préférence d'au moins 5 nm.

De préférence, la ou les nano-charge(s) de l'invention peu(ven)t avoir au moins une de leurs dimensions allant de 1 à 800 nm.

En considérant plusieurs nano-charges selon l'invention, on entend par le terme « dimension », la dimension moyenne en nombre de l'ensemble des nano-charges d'une population donnée, cette dimension étant classiquement déterminée par des méthodes bien connues de l'homme du métier.

La dimension de la ou des nano-charges selon l'invention peut être par exemple déterminée par microscopie, notamment par microscope électronique à balayage (MEB) ou par microscope électronique à transmission (MET). Plus particulièrement, la dimension de la ou des nano-charges peut être déterminée par MET sur au moins une vingtaine de clichés, par préparation d'échantillons du type composé de remplissage comprenant la ou lesdites nano-charges, à -140°C environ avec des épaisseurs de 100 nm environ, les échantillons étant ensuite positionnés sur un support en cuivre pour l'observation par MET. On appelle cette technique de préparation la cryo-ultramicrotomie.

Au moins une des nano-charges, ou plus particulièrement les nano-charges comprises dans le composé de remplissage, peu(ven)t avoir :
- un facteur de forme sensiblement égal à 1 : on parle alors de nano-charge isodimensionnelle, ou
- un facteur de forme supérieur à 1, de préférence d'au moins 10, et de préférence d'au moins 100.

Dans la présente invention, le facteur de forme est typiquement le rapport entre la plus grande dimension d'une nano-charge (telle que par exemple la longueur d'une nano-charge lorsqu'elle est du type lamellaire ou cylindrique) et la plus petite dimension de la nano-charge (telle que par exemple l'épaisseur d'une nano-charge du type lamellaire, ou le diamètre d'une nano-charge du type cylindrique).

La nano-charge de l'invention peut être de préférence une nano-charge inorganique pouvant être choisie parmi les carbonates de métaux alcalino-terreux, les sulfates de métaux alcalino-terreux, les oxydes métalliques, les oxydes de métalloïdes, les silicates métalliques, et les siloxanes (ou oligomères tri-dimensionnels organosiliciés).

A titre d'exemple :
- les nano-charges de carbonates de métaux alcalino-terreux peuvent être des nano-charges de carbonate de calcium,
- les nano-charges de sulfates de métaux alcalino-terreux peuvent être des nano-charges de sulfate de baryum,
- les nano-charges d'oxydes métalliques, ou en d'autres termes des nano-charges comprenant uniquement un ou plusieurs éléments oxygène et un ou plusieurs éléments métalliques, peuvent être des nano-charges d'alumine (Al₂O₃), d'oxyde de zinc (ZnO), de dioxyde de titane (TiO₂), d'oxyde de magnésium (MgO), d'oxydes de fer (Fe₂O₃, Fe₃O₄),
- les nano-charges d'oxydes de métalloïdes peuvent être des nano-charges de dioxyde de silicium (silice), notamment des nano-charges de silice pyrogénée, l'expression « silice pyrogénée » étant bien connue sous l'anglicisme « fumed silica »,
- les nano-charges de silicate métalliques peuvent être par exemple des aluminosilicates (nano-clay), ou des nano-charges de silicate d'aluminium et de magnésium hydraté telles que la montmorillonite appartenant à la famille des phyllosilicates,
- les nano-charges de siloxanes ou d'oligomères tri-dimensionnels organosiliciés peuvent être des nano-charges de silsesquioxanes (POSS) ou ses dérivés, tels que par exemple des nano-charges de Trisilanolphényl Polyhedral SilSesquioxane (TP-POSS).

De préférence, les nano-charges de l'invention peuvent être des nano-charges d'oxydes métalliques et/ou des nano-charges d'oxydes de métalloïdes.

La nano-charge de l'invention peut être une charge dite « traitée » ou une charge dite « non-traitée ».

On entend par « charge traitée » une charge ayant subi un traitement de surface, ou en d'autres termes, une charge traitée en surface. Ledit traitement de surface permet notamment de modifier les propriétés de surface de la charge, par exemple pour améliorer la compatibilité de la nano-charge avec l'huile minérale.

Dans un mode de réalisation préféré, la nano-charge de l'invention peut être une charge silanisée, ou en d'autres termes une nano-charge ayant été traitée pour obtenir une nano-charge silanisée.

Le traitement de surface utilisé pour obtenir une nano-charge silanisée est notamment un traitement de surface à partir d'au moins un composé silane (avec ou sans agent de couplage), ce type de traitement de surface étant bien connu de l'homme du métier.

Ainsi, la nano-charge silanisée de l'invention peut comprendre à sa surface des groupements siloxane et/ou silane. Lesdits groupements peuvent être du type vinylsilane, alkylsilane, epoxysilane, methacryloxysilane, acryloxysilane, aminosilane ou mercaptosilane.

Le composé silane utilisé pour obtenir la nanoparticule silanisée peut être choisi de préférence parmi :
- des alkyltriméthoxysilane ou des alkyltriéthoxysilane, tels que par exemple octadecyltriméthoxysilane (OdTMS - C18), octyl(triéthoxy)silane (OTES - C8), methyl triméthoxysilane, hexadecyl triméthoxysilane,
- des vinyltriméthoxysilane ou des vinyltriéthoxysilane,
- des méthacryloxylsilane ou des acryloxysilane, tels que par exemple 3-méthacryloxypropyl méthyldiméthoxysilane, 3-méthacryloxypropyl triméthoxysilane, 3-méthacryloxypropyl triméthoxysilane, 3-acryloxypropyl triméthoxysilane,
- des chlorosilane, tels que par exemple du diméthyle dichlorosilane, et
- un de leurs mélanges

La nano-charge traitée ou la nano-charge non-traitée selon l'invention peut avoir de préférence une surface spécifique (BET) d'au moins 70 m²/g, de préférence d'au moins 100 m²/g, et de préférence d'au moins 120 m²/g. La nano-charge peut avoir une surface spécifique (BET) d'au plus 1000 m²/g, et de préférence d'au plus 500 m²/g.

Dans la présente invention, la surface spécifique d'une nano-charge traitée ou d'une nano-charge non-traitée, peut être facilement déterminée selon la norme DIN 9277 (2010).

### Le câble électrique

Le câble électrique de l'invention comprend un ou plusieurs conducteur(s) électrique(s) allongé(s), au moins un élément de protection entourant le ou lesdits conducteur(s) électrique(s) allongé(s), et au moins un composé de remplissage tel que défini dans la présente description, le composé de remplissage étant entouré par ledit élément de protection.

Le conducteur électrique allongé peut être un monoconducteur tel que par exemple un fil métallique, ou un multiconducteur tel qu'une pluralité de fils métalliques, torsadés ou non. Le conducteur électrique allongé peut être réalisé à partir d'un matériau métallique notamment choisi parmi l'aluminium, un alliage d'aluminium, du cuivre, un alliage de cuivre, et une de leurs combinaisons.

L'élément de protection peut être choisi parmi une ou plusieurs couche(s) polymérique(s), une ou plusieurs couche(s) métallique(s), et une de leur combinaison.

Dans la présente invention, on entend par « couche polymérique » une couche comprenant au moins un polymère, la couche polymérique pouvant être avantageusement extrudée. Le polymère de la couche polymérique peut être celui décrit dans la suite de la description.

On entend par « couche métallique » une couche comprenant au moins un métal ou un alliage de métaux.

Le composé de remplissage peut se retrouver positionné entre au moins deux conducteurs électriques allongés, et/ou entre au moins un conducteur électrique allongé et l'élément de protection.

Dans un mode de réalisation particulier, le câble électrique peut comprendre en outre un élément isolant, notamment électriquement isolant, entouré par l'élément de protection.

L'élément isolant peut entourer au moins ledit conducteur électrique allongé. On peut alors parler de couche isolante. L'ensemble comprenant ledit conducteur électrique allongé entouré par ladite couche isolante peut former un conducteur électrique isolé.

Le composé de remplissage peut être en contact physique direct avec l'élément isolant. Plus particulièrement, lorsque le câble électrique comprend au moins un conducteur électrique isolé, le composé de remplissage peut être en contact physique direct avec ledit conducteur électrique isolé.

Ledit élément isolant peut comprendre avantageusement au moins un polymère, et peut être de préférence un élément extrudé par des techniques bien connues de l'homme du métier.

Plus particulièrement, l'élément isolant peut comprendre au moins 20,0% en poids de polymère, de préférence plus de 50,0 % en poids de polymère, et de façon particulièrement préférée au moins 70,0 % en poids de polymère, par rapport au poids total de l'élément isolant.

Dans la présente invention, on entend par le terme « polymère » tout type de polymères bien connu de l'homme du métier, tels que les homopolymères ou les copolymères (e.g. copolymère séquencé, copolymère statistique, terpolymère, ...etc).

Le polymère peut être avantageusement un polymère d'oléfine (polyoléfine) ou, en d'autres termes, un homo- ou co-polymère d'oléfine. De préférence, le polymère d'oléfine est un polymère d'éthylène ou un polymère de propylène.

Dans un mode de réalisation préféré, le polymère peut être un polymère apolaire, et de préférence un polymère d'oléfine apolaire.

Le polymère apolaire ne comporte ainsi sensiblement pas de groupements polaires tels que par exemple des groupements acrylate, carboxylique ou vinyle acétate.

A titre d'exemple, le polymère peut être choisi parmi un polyéthylène linéaire basse densité (LLDPE), un polyéthylène basse densité (LDPE), un polyéthylène moyenne densité (MDPE), un polyéthylène haute densité (HDPE), un copolymère d'éthylène, un copolymère de propylène, et un de leurs mélanges.

Dans un mode de réalisation particulier, l'élément isolant peut être classiquement une couche thermoplastique ou non réticulée.

Le câble électrique de l'invention peut être un câble électrique destiné au transport d'énergie et/ou un câble de télécommunication, tel que par exemple un câble de véhicule submersible télécommandé.

De préférence, le câble électrique de l'invention peut comprendre :
a. plusieurs conducteurs électriques isolés, et optionnellement un ou plusieurs conducteurs électriques non isolés,
b. au moins un composé de remplissage tel que défini dans l'invention, et
c. un élément de protection entourant l'ensemble des conducteurs électriques isolés et ledit composé de remplissage.

Les conducteurs électriques isolés (a) peuvent être agencés dans le câble électrique de la façon suivante. Le câble électrique peut comprendre un premier ensemble comprenant un ou plusieurs conducteurs électriques isolés, ce premier ensemble étant entouré par une couche de séparation, et un deuxième ensemble comprenant un ou plusieurs conducteurs électriques isolés, ce deuxième ensemble étant positionné autour dudit premier ensemble.

Le ou les conducteurs électriques non isolés peuvent être positionnés dans le premier ensemble et/ou dans le deuxième ensemble. Ces conducteurs électriques non isolés sont bien connus de l'homme du métier sous l'anglicisme « screen wire » ou conducteur de mise à la terre.

La couche de séparation entre le premier et le deuxième ensemble peut comprendre au moins une couche polymérique et/ou une couche métallique, la couche polymérique et la couche métallique étant notamment décrite dans la présente invention.

La couche métallique de la couche de séparation peut être notamment un écran métallique de mise à la terre, tel que par exemple un ruban métallique. La couche métallique de la couche de séparation peut être avantageusement utilisée pour relier à la terre le premier ensemble de conducteurs électriques isolés.

Le composé de remplissage (b) peut être positionné dans le premier ensemble et/ou dans le deuxième ensemble et/ou entre le premier et le deuxième ensemble. Plus particulièrement, le composé de remplissage peut être positionné entre les conducteurs électriques isolés du premier ensemble et/ou entre les conducteurs électriques isolés du deuxième ensemble et/ou entre les conducteurs électriques isolés du premier et du deuxième ensembles.

L'élément de protection (c), entourant l'ensemble des conducteurs électriques isolés et ledit composé de remplissage, peut être choisi parmi une ou plusieurs couche(s) polymérique(s), une ou plusieurs couche(s) métallique(s), et une de leur combinaison.

La couche polymérique de l'élément de protection peut être sous forme d'une couche extrudée et/ou d'une couche rubanée. A titre d'exemple, elle peut être une couche de polyester et/ou une couche de polyuréthane.

La couche métallique de l'élément de protection peut être sous forme d'un ensemble de conducteurs métalliques torsadés ou non, d'un ruban métallique et/ou d'un tube métallique. A titre d'exemple, elle peut être une couche de cuivre, une couche d'un alliage de cuivre et/ou une couche d'acier.

La couche métallique de l'élément de protection peut être avantageusement utilisée pour relier à la terre le deuxième ensemble de conducteurs électriques isolés.

Dans un mode de réalisation particulier, l'élément de protection (c) comprend au moins une première couche polymérique entourée par une première couche métallique. Il peut en outre comprendre une deuxième couche métallique entourée par la première couche polymérique et une deuxième couche polymérique entourant la première couche métallique.

### Procédé de fabrication d'un câble électrique

Un autre objet de l'invention est un procédé de fabrication d'un câble électrique selon l'invention, comprenant l'étape d'appliquer par pression le composé de remplissage dans le câble électrique de l'invention, notamment à l'intérieur de la zone délimitée par l'élément de protection, l'application s'effectuant par au moins une extrémité du câble électrique.

De préférence, le composé de remplissage est injecté dans les interstices ou les vides se trouvant entre les conducteurs électriques allongés, et notamment entre les conducteurs électriques isolés. On peut alors parler d'injection par bourrage sous pression.

Cette injection peut être effectuée à l'aide d'une pompe disposée à une extrémité du câble électrique. A titre d'exemple, la pression utilisée pour injecter le composé de remplissage peut aller de 10 bars à 100 bars, et de préférence de 10 bars à 60 bars.

D'autres caractéristiques et avantages de la présente invention apparaîtront à la lumière de la description d'exemples non limitatifs de composés de remplissage et de câbles selon l'invention fait notamment en référence aux figures suivantes.

### Brève description des dessins

[Fig. 1]

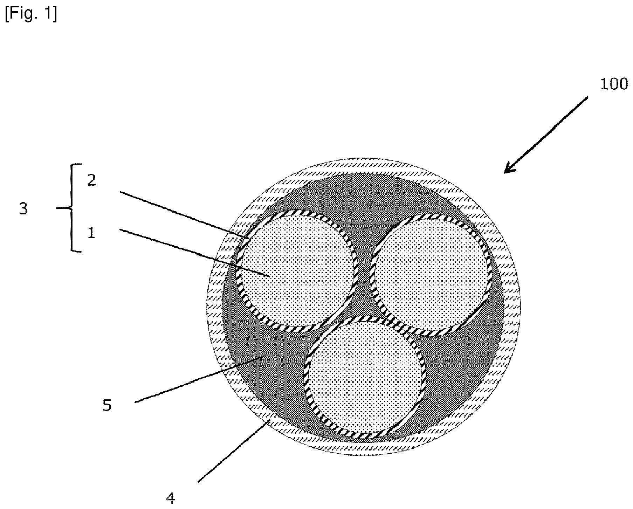

   La figure 1 représente une vue schématique d'un câble électrique selon un premier mode de réalisation particulier conforme à l'invention.
[Fig. 2]

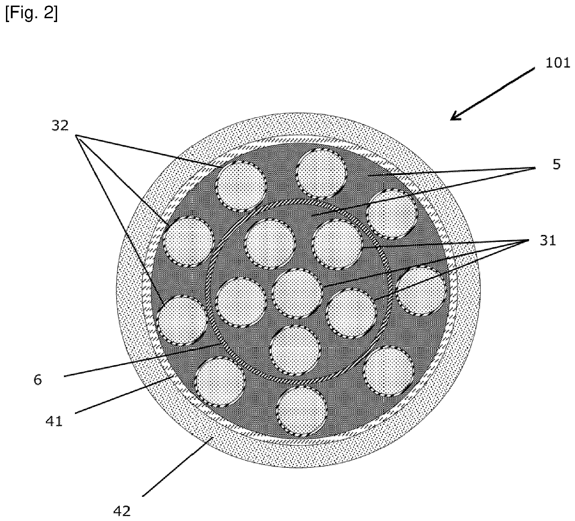

   La figure 2 représente une vue schématique d'un câble électrique selon un deuxième mode de réalisation particulier conforme à l'invention.

Pour des raisons de clarté, seuls les éléments essentiels pour la compréhension de l'invention ont été représentés de manière schématique, et ceci sans respect de l'échelle.

La figure 1 représente un câble électrique 100 selon un premier mode de réalisation particulier de l'invention.

Le câble électrique 100 comprend plusieurs conducteurs électriques allongés 1, chacun desdits conducteurs électriques allongés 1 étant entouré par au moins une couche électriquement isolante 2, formant ainsi des conducteurs électriques isolés 3.

L'ensemble des conducteurs électriques isolés 3 est entouré par un élément de protection 4 du type couche polymérique extrudée.

Un composé de remplissage 5 selon l'invention est positionné à l'intérieur de la zone délimitée par l'élément de protection 4, et notamment dans les interstices ou vides entre les différents conducteurs électriques isolés 3. L'élément de protection 4 entoure donc le composé de remplissage 5.

La figure 2 représente un câble électrique 101 selon un deuxième mode de réalisation particulier de l'invention.

Le câble électrique 101 est notamment un câble de véhicule submersible télécommandé, et comprend un premier ensemble 31 de conducteurs électriques isolés 3, ce premier ensemble 31 étant entouré par une couche de séparation 6. La couche de séparation 6 comprend une couche polymérique d'un polymère de propylène, entourée par une couche métallique du type couche rubanée de cuivre. La couche métallique de la couche de séparation 6 est un écran métallique utilisé pour relier à la terre le premier ensemble 31.

Le câble électrique comprend en outre un deuxième ensemble 32 de conducteurs électriques isolés 3, ce deuxième ensemble 32 étant positionné autour dudit premier ensemble 31.

Le câble électrique comprend en outre un élément de protection, ledit élément de protection entourant le premier ensemble 31 de conducteurs électriques isolés, le deuxième ensemble 32 de conducteurs électriques isolés, et la couche de séparation 6.

L'élément de protection comprend une première couche polymérique 41 du type couche thermoplastique de polyester, entourée par une première couche métallique 42 comprenant une pluralité de conducteurs en acier, de préférence torsadés hélicoïdalement.

L'élément de protection peut en outre comprendre une deuxième couche métallique (non représentée) du type couche rubanée de cuivre, entourée par la première couche polymérique 41. Ladite deuxième couche métallique de la couche de protection est un écran métallique utilisé pour relier à la terre le deuxième ensemble 32.

L'élément de protection peut en outre comprendre une deuxième couche polymérique (non représentée) du type couche rubanée de polyuréthane, entourant la première couche métallique 42.

Le câble électrique peut comprendre en outre des conducteurs électriques non isolés (non représentés), dits conducteurs de mise à la terre, positionnés dans le premier ensemble et dans le deuxième ensemble.

Un composé de remplissage 5 selon l'invention est positionné à l'intérieur de la zone délimitée par l'élément de protection, et notamment dans les interstices ou vides entre les différents conducteurs électriques isolés et non isolés du premier ensemble 31 et du deuxième ensemble 32. L'élément de protection, composé au moins des couches 41 et 42, entoure donc le composé de remplissage 5.

### EXEMPLES

### 1. Préparation d'un composé de remplissage selon l'invention

Un composé de remplissage (I1) conforme à l'invention est préparé avec les constituants suivants :
- 73 % en poids d'huile minérale, et
- 27 % en poids de nano-charge,
les pourcentages (%) en poids étant exprimées par rapport au poids total du composé de remplissage.

L'origine des constituants décrits dans l'exemple ci-dessus est la suivante :
- l'huile minérale est une huile minérale du type naphténique commercialisée par la société Nynas sous la référence Nyflex 820, l'huile comprenant 7% d'atomes de carbone aromatique, 40% d'atomes de carbone naphténique et 53% d'atomes de carbone paraffinique ; et
- la nano-charge sont des particules d'oxyde de silicium traitées en surface avec du diméthyle dichlorosilane (DDS), commercialisées par la société Aerosil sous la référence Aerosil R 974, cette nano-charge ayant les caractéristiques suivantes : particules élémentaires sphériques avec un facteur de forme sensiblement égale à 1 dont le diamètre est inférieur à 100 nm, et la surface spécifique (BET) de 170 ± 20 m²/g.

Le composé de remplissage I1 est préparé en mélangeant la nano-charge avec l'huile minérale, dans un mélangeur, à température ambiante (25°C), pendant environ 5 minutes à une vitesse d'environ 2200 tours par minute.

### 2. Caractérisations

Afin d'étudier la viscosité du composé de remplissage de l'invention, on prépare des essais avec le composé I1, et avec un composé de remplissage comparatif (C1) du type adhésif thermofusible. L'adhésif thermofusible utilisé est celui commercialisé par la société Henkel sous la référence Technomelt PS 8673L.

A ce titre, on forme des disques de composés I1 et C1, de 25 mm de rayon et 2 mm d'épaisseur environ, à l'aide d'un moule.

La viscosité des composés I1 et C1 est déterminée selon la norme ASTM D 4440 à l'aide d'un viscosimètre dynamique en configuration plan-plan sous une fréquence de 50Hz, avec une déformation de 5% et une rampe en température de 5°C/min.

Les résultats de viscosité en pascal seconde (Pa.s) sont rassemblés dans le tableau 1 ci-dessous, en fonction de la température en °C.

**[Tableaux 1]**

| | 40°C | 50°C | 60°C | 70°C | 80°C | 90°C | 100°C |
|---|---|---|---|---|---|---|---|
| I1 | 423 | 415 | 397 | 372 | 338 | 316 | 326 |
| C1 | 770 | 498 | 417 | 394 | 377 | 337 | 294 |

Afin d'étudier la résistance au claquage d'une couche isolante en contact avec le composé de remplissage, on prépare les essais suivants :
- Essai 1 (essai selon l'invention) : une couche isolante en contact avec le composé I1,
- Essai 2 (essai comparatif) : une couche isolante en contact avec le composé C1, et
- Essai 3 (essai comparatif) : une couche isolante seule,
la couche isolante étant une couche d'un copolymère de propylène commercialisé par Borealis sous la référence PP4821.

A ce titre, on forme une dizaine de plaques de la couche isolante seule (i.e. couche d'un copolymère de propylène selon l'essai 3), de diamètre 75 mm et d'épaisseur 500 µm, pour chaque essai (afin de vérifier la répétabilité des résultats concernant les mesures de claquage).

Pour l'essai 1, 10 grammes de composé I1 sont déposés sur chaque face de la couche isolante de l'essai 3.

Pour l'essai 2, 10 grammes de composé C1 sont déposés sur chaque face de la couche isolante de l'essai 3.

Ainsi, les essais 1 et 2 comprennent un tricouche (i.e. la couche isolante de l'essai 3 prise en sandwich entre deux couches du composé I1 ou C1). Les tricouches de l'essai 1 et de l'essai 2 sont placés 10 jours à l'étuve sous 100°C.

Les deux couches de composé I1 et les deux couches de composé C1 sont alors retirées des tricouches en question, après les 10 jours. La résistance au claquage est alors mesurée sur la couche isolante résiduelle de l'essai 1 et sur la couche isolante résiduelle de l'essai 2.

Concernant l'essai 3, la plaque de couche isolante seule, ne comprenant pas de composé I1 ou C1, n'est pas passée à l'étuve, et la résistance au claquage est directement mesurée sur une dizaine de ces plaques.

La résistance au claquage (diélectrique) des essais 1 à 3 est déterminée selon la norme ASTM D 149 à l'aide d'un banc de claquage en courant alternatif.

Les résultats sont rassemblés dans le tableau 2 ci-dessous.

**[Tableaux 2]**

| | Essai 1 | Essai 2 | Essai 3 |
|---|---|---|---|
| Résistance au claquage diélectrique (exprimée en kV/mm) en courant alternatif, à 25°C | 98 | 78 | 89 |

## Revendications

1. Câble électrique (100, 101) comprenant au moins un conducteur électrique allongé (1), au moins un élément de protection (4, 41, 42) entourant ledit conducteur électrique allongé (1), et au moins un composé de remplissage (5) entouré par ledit élément de protection (4, 41, 42), **caractérisé en ce que** le composé de remplissage (5) comprend :
- plus de 20,0 % en poids d'une huile minérale, par rapport au poids total du composé de remplissage, et
- au moins une nano-charge.

2. Câble selon la revendication 1, **caractérisé en ce que** le composé de remplissage comprend plus de 50,0 % en poids d'huile minérale, et de préférence au moins 60,0% en poids d'huile minérale, par rapport au poids total du composé de remplissage.

3. Câble selon la revendication 1 ou 2, **caractérisé en ce que** le composé de remplissage comprend moins de 50,0 % en poids de nano-charge, et de préférence au plus 40,0% en poids de nano-charge, par rapport au poids total du composé de remplissage.

4. Câble selon l'une quelconque des revendications précédentes, **caractérisé en ce que** la viscosité du composé de remplissage est d'au moins 100 Pa.s, déterminée à 100°C selon la norme ASTM D 4440.

5. Câble selon l'une quelconque des revendications précédentes, **caractérisé en ce que** l'huile minérale est choisie parmi les huiles naphténiques, les huiles paraffiniques, et un de leurs mélanges.

6. Câble selon l'une quelconque des revendications précédentes, **caractérisé en ce que** la nano-charge a au moins une de ses dimensions d'au plus 2000 nm, et de préférence d'au plus 1000 nm.

7. Câble selon l'une quelconque des revendications précédentes, **caractérisé en ce que** la nano-charge est une charge traitée.

8. Câble selon l'une quelconque des revendications précédentes, caractérisé que la nano-charge est une charge silanisée.

9. Câble selon l'une quelconque des revendications précédentes, **caractérisé en ce que** la nano-charge a une surface spécifique (BET) d'au moins 70 m²/g, et de préférence d'au moins 100 m²/g.

10. Câble selon l'une quelconque des revendications précédentes, **caractérisé en ce que** la nano-charge est une charge minérale, de préférence choisie parmi les carbonates de métaux alcalino-terreux, les sulfates de métaux alcalino-terreux, les oxydes métalliques, les oxydes de métalloïdes, les silicates métalliques, et les siloxanes.

11. Câble selon l'une quelconque des revendications précédentes, **caractérisé en ce qu'**il comprend en outre un élément isolant (2) entouré par l'élément de protection (4, 41, 42).

12. Câble selon la revendication 11, **caractérisé en ce que** l'élément isolant (2) comprend au moins un polymère de propylène.

13. Câble selon la revendication 11 ou 12, **caractérisé en ce que** le composé de remplissage (5) est en contact physique direct avec l'élément isolant (2).

14. Câble selon l'une quelconque des revendications précédentes, **caractérisé en ce que** l'élément de protection (4, 41, 42) est choisi parmi une couche polymérique, une couche métallique, et une de leur combinaison.

15. Câble selon l'une quelconque des revendications précédentes, **caractérisé en ce que** le câble est un câble de véhicule submersible télécommandé.
